Europäisches Patentamt

European Patent Office

Office européen des brevets

(19)

(11) Veröffentlichungsnummer: **0 020 862**
**B1**

(12) # EUROPÄISCHE PATENTSCHRIFT

(45) Veröffentlichungstag der Patentschrift:
26.05.82

(51) Int. Cl.³: **B 60 T 17/08**

(21) Anmeldenummer: **80101381.4**

(22) Anmeldetag: **17.03.80**

(54) **Entlüftungsvorrichtung an einem kombinierten Betriebsbrems- und Federspeicherbremszylinder.**

(30) Priorität: **08.06.79 DE 2923359**

(43) Veröffentlichungstag der Anmeldung:
**07.01.81 Patentblatt 81/1**

(45) Bekanntmachung des Hinweises auf die Patenterteilung:
**26.05.82 Patentblatt 82/21**

(84) Benannte Vertragsstaaten:
**FR IT NL**

(56) Entgegenhaltungen:
**DE-A-1 906 818**
**DE-B-2 218 070**
**US-A-3 302 530**
**US-A-3 406 609**

(73) Patentinhaber: **Knorr-Bremse GmbH, Moosacher Strasse 80, D-8000 München 40 (DE)**

(72) Erfinder: **Pricha, Hans, Dornbergstrasse 37, D-8000 München 80 (DE)**

Entlüftungsvorrichtung an einem kombinierten Betriebsbrems- und Federspeicherbremszylinder

Die Erfindung betrifft eine Entlüftungsvorrichtung nach dem Oberbegriff des Patentanspruches 1.

Bei der Entwicklung von kombinierten Betriebsbrems- und Federspeicherbremszylinder ist man seit längerem bestrebt, die Be- und Entlüftung der verschiedenen Zylinderräume so vorzunehmen, dass diese nicht verschmutzen und korrodieren können.

So sind Entlüftungsvorrichtungen bekannt (FR-A-1 599 539), bei welchen die Möglichkeit geschaffen ist, bei Betätigung der Federspeicherbremse das sich in der Federkammer vergrössernde Volumen mit Luft aus der Druckkammer des Betriebsbremszylinders zu belüften. Die mit dem Kolben des Federspeicherbremszylinders verbundene und bei Betätigung des Federspeicherbremszylinders in den Betriebsbremszylinders ausfahrende Kolbenstange ist bei derartigen Anordnungen hohl ausgebildet, wobei der Kopf der Kolbenstange ein Druckstück trägt, über welches Druckluft aus der Druckkammer des Betriebsbremszylinders nach Passieren der hohlen Kolbenstange über einen Durchlass in die die Speicherfeder des Federspeicherbremszylinders aufnehmende Federkammer gelangen kann. Durch geeignete, ansich bekannte Ventileinrichtungen ist hierbei Vorsorge getroffen, dass entweder nur die Federspeicherbremse oder nur die Betriebsbremse wirksam werden können. Das im Inneren des Druckstückes die Verbindung zwischen Federkammer und Druckkammer des Betriebsbremszylinders steuernde Ventileinrichtung arbeitet jedoch nicht in jedem Fall zuverlässig, d.h. bei einem plötzlichen Verschieben der Kolbenstange und einem starken Unterdruck innerhalb der Federkammer ist es möglich, dass die Ventileinrichtung gegen Federkraft schliesst, ein Druckausgleich des sich vergrössernden Volumens innerhalb der Federkammer is dadurch nicht möglich.

Es sind darüber hinaus verschiedenartige, äusserst kompliziert aufgebaute, wegabhängig gesteuerte Konstruktionen bekannt, mit welchen versucht wird, den erwünschten Druckausgleich der Federkammer zu erreichen; hierbei sind auch Konstruktionen vorgesehen, welche Druckausgleichsverbindungen in die Druckkammer des Federspeicherbremszylinders steuern.

Davon ausgehend besteht die Aufgabe der Erfindung darin, eine Entlüftungsvorrichtung der in Rede stehenden Art mit baulich einfachen Mitteln so auszugestalten, dass der bei Betätigung des Federspeicherbremszylinders erwünschte Druckausgleich der im Volumen sich vergrössernden Federkammer immer sichergestellt ist, selbst dann, wenn in der Federkammer und in der mit der Federkammer in Verbindung stehenden hohlen Kolbenstange ein starker Unterdruck bei ausfahrender Kolbenstange entstehen sollte. In gleicher Weise soll die Anordnung absolut sicher wirken, um die Verbindung zwischen der Druckkammer des Betriebsbremszylinders und der Federkammer des Federspeicherbremszylinders zu verschliessen, wenn normale Betriebsbremsung, also Druckbeaufschlagung durch die Druckkammer des Bremszylinders erfolgt.

Die Lösung dieser Aufgabe kennzeichnet sich durch die Merkmale nach dem Kennzeichnungsteil des Patentanspruches 1.

Die als Membranventil wirkende Entlüftungsvorrichtung ist baulich äusserst einfach beschaffen und wirkt absolut sicher. Die Membrane der Entlüftungsvorrichtung besitzt zweierlei Verhaltensweisen, d.h. bei Druckbeaufschlagung durch die Druckluft der Druckkammer des Betriebsbremszylinders wird die Membrane unter sicherer Abdichtung gegen einen Öffnungen aufweisenden Sitz angepresst, welcher in Form eines Verschlussdeckels bestehen kann, derart, dass diese Öffnungen absolut sicher abgedichtet werden und somit die Verbindung zwischen der hohlen Kolbenstange und dem Betriebsbremszylinder unterbunden ist. Bei Einwirken von Unterdruck, welcher an der entgegengesetzten Seite der Membrane zur Wirkung kommt, ist eine entgegengesetzte Verhaltensweise vorgesehen, d.h. die Membrane wird zwar in Richtung des Verschlussdeckels gezogen, gleichzeitig jedoch so verformt, dass die im Verschlussdeckel bzw. im Sitzkörper vorhandenen Öffnungen freigegeben werden. Auf diese Weise wird die gewünschte Verbindung zwischen der Druckkammer des Betriebsbremszylinders und der hohlen Kolbenstange und somit der Federkammer des Federspeicherbremszylinders hergestellt.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.

Fig. 1 ist eine schematische Ansicht eines kombinierten Betriebsbrems- und Federspeicherbremszylinders unter Verwendung der Entlüftungsvorrichtung nach der Erfindung;

Fig. 2 ist eine vergrösserte Schnittansicht einer ersten Ausführungsform der Entlüftungsvorrichtung nach der Erfindung;

Fig. 3 ist eine Draufsicht von Linie III-III in Fig. 2 unter Darstellung des Verschlussdeckels;

Fig. 4 ist eine Schnittansicht einer Entlüftungsvorrichtung gemäss einer weiteren Ausführungsform, wobei die Verschlusslage der Membrane dargestellt ist, und

Fig. 5 ist eine der Fig. 4 vergleichbare Schnittansicht unter Darstellung der geöffneten Lage der Membrane, welche durch Unterdruck innerhalb des Kanals 41 verformt wurde.

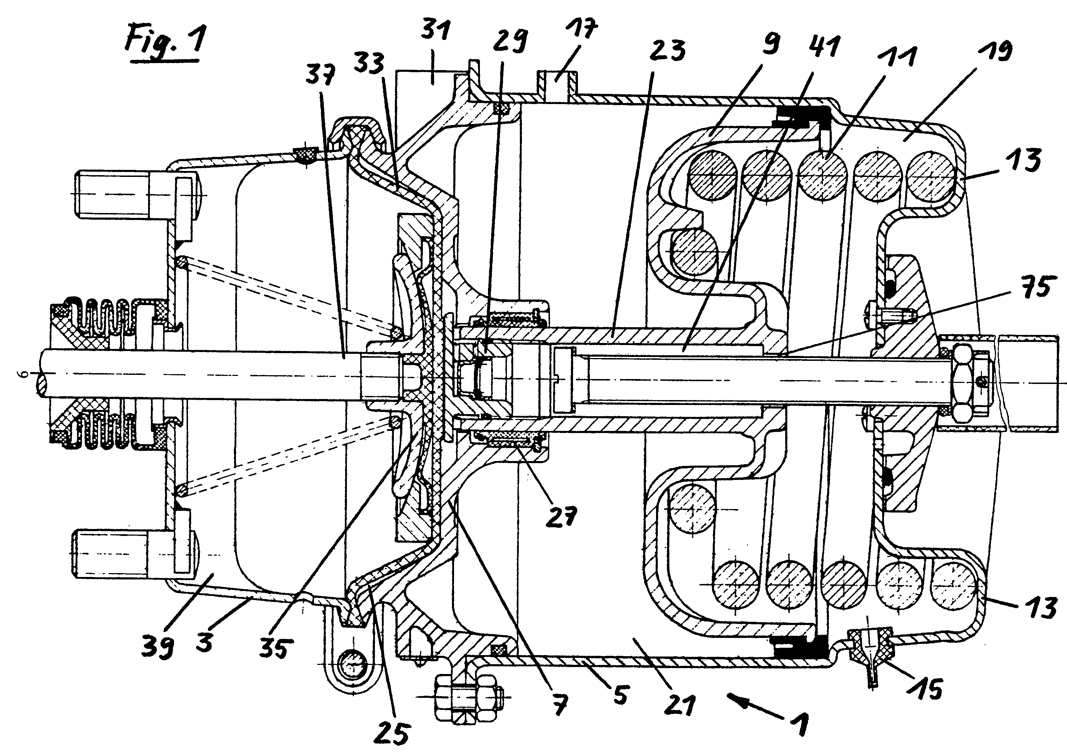

In Fig. 1 der Zeichnung ist ein kombinierter Betriebsbrems- und Federspeicherbremszylinder, nachfolgend Kombizylinder 1 benannt, dargestellt. Der Kombizylinder besteht aus dem Betriebsbremszylinder 3 und dem Federspeicherbremszylinder 5, welche durch eine Zwischenwand 7 voneinander getrennt sind. Innerhalb des Federspeicherbremszylinders ist ein Kolben 9 verschiebbar angeordnet, wobei an einer Seite des Kolbens 9 eine Speicherfeder 11 anliegt. Die Speicherfeder 11 stützt sich an ihrer entgegengesetzten Seite am Boden 13 des Federspeicherbremszylinders 5 an. In den Boden 13 ist ein Druckentlastungsventil 15 von an sich bekannter Konstruktion eingesetzt. In die gemäss Fig. 1 links bezüglich des Kolbens 9 bestehende Kammer mündet ein Einlass 17, über welchen Druckmittel eingeleitet wird, um den Kolben 9 unter Verspannung der Speicherfeder 11 nach rechts gerichtet zu verschieben. Bei dieser Verschiebung des Kolbens 9 wird die Luft, welche innerhalb der die Speicherfeder 11 aufnehmenden Federkammer 19 besteht, aus dem Druckentlastungsventil 15 herausgedrückt. Wird dagegen der Druck in der Druckkammer 21 des Federspeicherbremszylinders bei Betätigung eines an sich bekannten, an den Einlass 17 angeschlossenen Ventils entlastet, dann vermag die Speicherfeder 11 den Kolben 9 gemäss Darstellung in Fig. 1 nach links gerichtet zu verschieben.

Der Kolben 9 ist mit einer Kolbenstange 23 verbunden, welche sich durch die Zwischenwand 7 in den Bereich der Druckkammer 25 des Betriebsbremszylinders 3 erstreckt. Eine in die Zwischenwand 7 eingesetzte Dichtung 27 dichtet gegenüber der Aussenwand der Kolbenstange während deren Längsbewegungen ab. Die Kolbenstange trägt an ihrem vorderen, in den Bereich der Druckkammer 25 sich erstreckenden Ende ein Druckstück 29 von nachfolgend im einzelnen dargestellter Konstruktion. In die Druckkammer 25 mündet ein Einlass 31, über welchen zur Betätigung der Betriebsbremse Druckmittel, so Druckluft eingelassen wird. Diese Druckluft wirkt auf die innerhalb des Betriebsbremszylinders 3 eingesetzte Membrane 33 ein, an deren entgegengesetzter Seite ein Druckstück in Form eines Kolbenstangenkopfes 35 vorgesehen ist. Der Kolbenstangenkopf steht mit einer Kolbenstange 37 in Verbindung, die sich aus der links bezüglich der Membrane 33 bestehenden Kammer 39 des Betriebsbremszylinders 3 erstreckt und (in nicht dargestellter Weise) mit einem Bremsbetätigungsmechanismus ausserhalb des Kombizylinders 1 in Verbindung steht. Hierbei kann es sich beispielsweise um die Betätigungsteile einer Keilspreizbremse oder einer S-Nockenbremse eines Kraftfahrzeugs handeln. Wird die Betriebsbremse durch Einleiten von Druckluft in den Einlass 31 betätigt, dann verschiebt die Druckluft die Membrane 33, den Kolbenstangenkopf 35 und die Kolbenstange 37 gemäss Darstellung nach links gerichtet, so dass die an die Kolbenstange angeschlossenen Bremsbetätigungsteile in Wirkung kommen und die Bremse anlegen. Während dieser normalen Betriebsbremsung verbleibt die Federspeicherbremse in ihrer inaktiven Position, in welcher die Speicherfeder 11 durch Halten des Drucks in der Druckkammer 21 zusammengedrückt ist. Die Federspeicherbremse kann verwendet werden, wenn die Betriebsbremse ausfällt, wenn also die Druckmittelverbindung in den Einlass 31 unterbrochen ist, oder wenn sie als sogenannte Feststellbremse benutzt werden soll. In diesem Fall wirkt sie als Parkbremse bei einem abgestellten Fahrzeug.

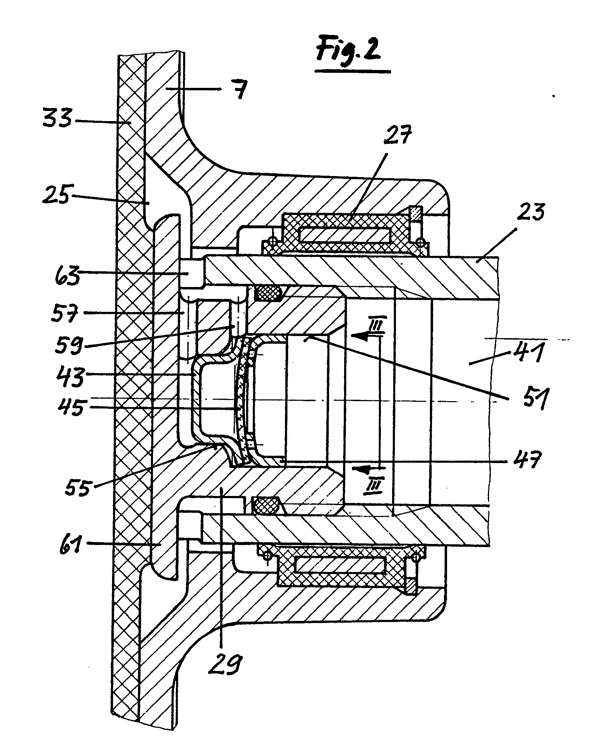

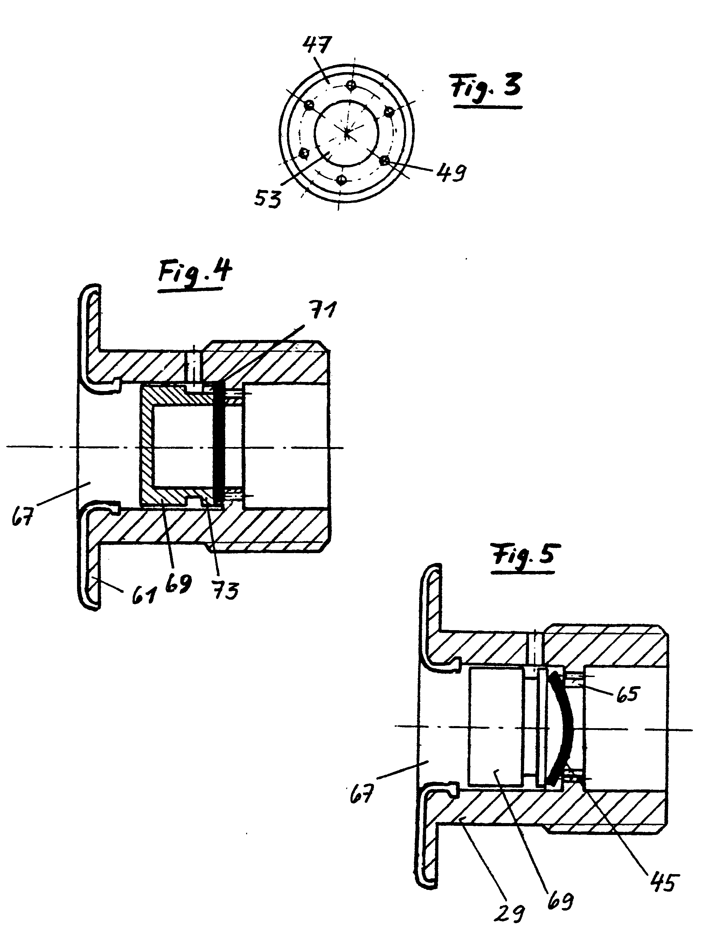

Das vorstehend genannte Druckstück 29 ist unter Abdichtung am Ende der Kolbenstange 23 befestigt, welche in ihrem Inneren einen Kanal 41 aufweist. So ist das Druckstück 29 gemäss Darstellung unter Verwendung eines Dichtungselements in das offene Ende der Kolbenstange 23 eingeschraubt. Das Druckstück enthält bei der Ausführungsform nach Fig. 1 und 2 eine innere Ausnehmung, in welche ein Kolben 43, eine Membrane 45 und ein Verschlussdeckel 47 eingesetzt sind. Der Verschlussdeckel 47, dessen Draufsicht aus Fig. 3 ersichtlich ist, besitzt mehrere am Umfang unter Abstand verteilte Bohrungen 49 und ist unter Abdichtung in die ihn aufnehmende Bohrung 51 eingepresst. Der Verschlussdeckel 47 besitzt in der Ausführungsform nach Fig. 1 und 2 die Form eines billigen Normteils und weist die aus Fig. 3 ersichtliche mittige Öffnung 53 auf. An der gemäss Fig. 2 linken Seite des ortsfest unter Abdichtung eingepressten Verschlussdeckels liegt die Membrane 45 an, wobei sie sowohl die Öffnung 53 als auch die Bohrungen 49 abzudecken vermag. Die Membrane ist aus einem bekannten Gummimaterial bzw. Kunststoff gefertigt und weist eine Einlage, so eine Gewebeeinlage auf. Diese Einlage verleiht der Membrane sowohl Festigkeit als auch eine gewisse Eigenelastizität. An der bezüglich des Verschlussdeckels 47 entgegengesetzten Seite der Membrane liegt der Kolben 43 an; dieser ist in die ihn aufnehmenden Bohrung 55 des Druckstücks 29 unter ausreichend enger Passung so eingesetzt, dass er Längsbewegungen innerhalb seiner Bohrung auszuführen vermag. In das Druckstück 29 münden zwei seitliche Kanäle 57 und 59, wobei der Kanal 57 vorzugsweise unmittelbar an die Innenfläche des Kopfes 61 des Druckstücks angrenzt, während der Kanal 59 in den Bereich der Membrane 45 und der an ihr anliegenden Teile mündet.

Es ist aus Fig. 2 zu ersehen, dass am äusseren Ende der Kolbenstange 23, also im Bereich der Anlage am Kopf 61, eine oder mehrere Durchbrechungen 63 vorgesehen sind. Befindet sich die Kolbenstange mit dem Druckstück 29 in der aus Fig. 2 ersichtlichen Position, dann vermag die in der Druckkammer 25 bei Betriebsbremsung bestehende Druckluft über die Durchbrechung 63 und den Kanal 57 auf die Kopfseite des Kolbens 43 einzuwirken, wie nachfolgend ausführlich erläutert ist.

Bei der Ausführungsform nach den Fig. 4 und 5 wurde auf den Verschlussdeckel 47 verzichtet. Die Funktion des Verschlussdeckels übernimmt bei dieser Ausführungsform ein vom Druckstück radial nach innen vorstehender Bund 65, welcher an seinem Gesamtumfang durch die Bohrungen 49 durchsetzt ist. Auch wurde bei der Ausführungsform nach Fig. 4 und 5 auf den Kanal 57 verzichtet; stattdessen ist der Kopf 61 des Druckstücks nicht durchgehend ausgebildet, sondern weist eine zentrale Öffnung 67 auf, über welche die in der Druckkammer 21 bestehende Druckluft direkt auf den dargestellten Kolben 69 einzuwirken vermag. Der Kolben 69 der Ausführungsform nach den Fig. 4 und 5 besitzt gegenüber dem Kolben 43 der erstgenannten Ausführungsform unterschiedliche Gestalt und liegt mit einem schmalen, Durchbrechungen 71 aufweisenden Teil 73 auf der Membrane 45 auf. Die Wirkungsweise der erfindungsgemässen Entlüftungsvorrichtung ist wie folgt:

Bei einer normalen Betriebsbremsung wird Druckluft in vorbeschriebener Weise in den Einlass 31 des Betriebsbremszylinders eingelassen, um die Kolbenstange 37 zum Zwecke der Betätigung der Bremse zu verschieben. Die auf diese Weise innerhalb der Druckkammer 25 bestehende Druckluft wirkt rückwärtig auch auf den Kolben 43 der Ausführungsform nach Fig. 1 und 2 bzw. auf den Kolben 69 der Ausführungsform nach den Fig. 4 und 5 ein. Bei der Ausführungsform nach Fig. 1 und 2 gelangt die Druckluft über die Durchbrechung bzw. die Durchbrechungen 63 und über den Kanal 57 bzw. mehrere derartige Kanäle 57 an die Vorderseite des Kolbens 43 und verschiebt diesen gemäss Darstellung nach rechts gerichtet. Der Kolben drückt dabei auf die Membrane 45, so dass diese in Überdeckung der Öffnung 43 an die Bohrungen 49 angepresst wird. Bei der Ausführungsform nach Fig. 1 und 2 wirkt auch über den Kanal 59 Druckluft auf den seitlich auskagenden Rand des Kolbens 43 ein, um diesen gegen die Membrane 45 anzupressen, derart, dass die Membrane sowohl die Öffnung 53 als auch die Bohrungen 49 verschliesst. Auf diese Weise ist jegliche Druckmittelverbindung zwischen der Druckkammer 25 des Betriebsbremszylinders 3 und dem Kanal 41 unterbunden. Der Kanal 41 im Inneren der Kolbenstange 37 steht über einen Durchlass 75 mit der Federkammer 19 in Verbindung. Dies bedeutet, dass auch die Druckmittelverbindung von der Druckkammer 25 in die Federkammer 19 unterbunden ist.

Wird die Federspeicherbremse als Hilfsbremse (bei Ausfall der Betriebsbremse) oder als Feststellbremse verwendet, dann wird der Druck in der Druckkammer 21 mit Hilfe einer an sich bekannten, an den Einlass 17 angeschlossenen Ventileinrichtung reduziert, derart, dass die Speicherfeder 11 den Kolben 9 gemäss Fig. 1 nach links gerichtet zu verschieben vermag. Innerhalb der die Speicherfeder 11 aufnehmende Federkammer 19 entsteht hierdurch Unterdruck, da sich das Volumen der Federkammer während der nach links gerichteten Verschiebung des Kolbens 9 vergrössert. Während dieser Verschiebung wird der Druck innerhalb der Druckkammer 25 des Betriebsbremszylinders vorzugsweise zumindest auf Atmosphärendruck gehalten. Bei der vorbeschriebenen, nach links gerichteten Verschiebung des Kolbens 9 hat der sich bildende Unterdruck zur Folge, dass die Membrane 45 in der aus Fig. 5 der Zeichnung ersichtlichen Weise durchgebogen, d.h. in Richtung der Öffnung 53 gezogen wird, so dass der Aussenrand der Membrane die Bohrungen 49 im Verschlussdeckel 47 bzw. im Bund 65 freigibt. Da die Druckkammer 25 über den Einlass 31 und eine an sich bekannte (nicht dargestellte) Ventileinrichtung zumindest mit Atmosphäre verbunden ist, kann Luft zum Ausgleich des Unterdrucks in der Federkammer 19 in diese einströmen. Die zum Volumen- bzw. Druckausgleich in die Federkammer 19 einströmende Luft passiert dabei den Einlass 31 des Betriebsbremszylinders, die Druckkammer 25, die Durchbrechung bzw. die Durchbrechungen 63 gemäss Ausführungsform von Fig. 1 und 2, den Kanal 59, die nunmehr von der Membrane freigegebenen Bohrungen 49, den im Inneren der Kolbenstange 41 bestehenden Kanal und den vom Kanal 41 in die Federkammer führenden Durchlass 75. Während dieser Belüftung der Federkammer wird die Membrane 45, bedingt durch den bestehenden Druckunterschied, im wesentlichen in der in Fig. 5 dargestellten Lage gehalten, wobei die Membrane den Kolben 43 (Fig. 1 und 2) bzw. den Kolben 69 (Fig. 4 und 5) geringfügig verschiebt. Ist die Kolbenstange 23 vollständig ausgefahren und die Bremse als Hilfsbremse oder als Feststellbremse wirksam, dann ist mittlerweile der erwünschte Druckausgleich herbeigeführt, d.h. innerhalb der Federkammer 19 besteht im wesentlichen atmosphärischer Druck.

Wird die Federspeicherbremse gelöst, indem Druckluft in die Druckkammer 21 eingeleitet wird, dann verschiebt sich der Kolben 9 des Federspeicherbremszylinders 5 in vorbeschriebener Weise gemäss Fig. 1 nach rechts gerichtet. Die Membrane behält während dieser Bewegung ihre dichtende Anlage an der Öffnung 53 bzw. an den Bohrungen 49, so dass die infolge der Volumenverkleinerung der Federkammer 19 in dieser komprimierte Luft über das Druckentlastungsventil 15 entweicht. Die Luft und etwaige in der Federkammer 19 enthaltene Staubteilchen werden also durch das Druckentlastungsventil 15 abgeblasen. Die Druckentlastung kann auch über das Druckstück 29 geschehen, solange innerhalb der Druckkammer 25 zumindest Atmosphärendruck besteht. In diesem Falle wirkt der bei Volumenverkleinerung der Federkammer 19 entstehende Überdruck über den Kanal 41 auf die Membrane 45 ein, so dass diese etwas von dem Verschlussdeckel abgehoben wird. Hierbei werden die Öffnungen 53 und die Bohrungen 49 freigelegt, so dass die unter Überdruck stehende Luft seitlich durch den Kanal 59 und über die Durchbrechung 63, die Druckkammer 25, den Einlass 31 und eine (nicht dargestellte) Ventileinrichtung in die Aussenluft entweichen kann. Die Öffnungscharakteristiken sowohl des Druckentlastungsventils 15 als auch der im Druckstück 29 enthaltenen Entlüftungsvorrichtung nach der Erfindung können in beliebiger Weise eingestellt werden, um den bei Lösung der Federspeicherbremse in der Federkammer entstehenden Überdruck abzubauen bzw. abzublasen.

## BEZUGSZEICHENLISTE

1 = Kombizylinder
3 = Betriebsbremszylinder

5 = Federspeicherbremszylinder
7 = Zwischenwand
9 = Kolben
11 = Speicherfeder
13 = Boden
15 = Druckentlastungsventil
17 = Einlass
19 = Federkammer
21 = Druckkammer
23 = Kolbenstange
25 = Druckkammer
27 = Dichtung
29 = Druckstück
31 = Einlass
33 = Membrane
35 = Kolbenstangenkopf
37 = Kolbenstange
39 = Kammer
41 = Kanal
43 = Kolben
45 = Membrane
47 = Verschlussdeckel
49 = Bohrung
51 = Bohrung
53 = Öffnung
55 = Bohrung
57 = Kanal
59 = Kanal
61 = Kopf
63 = Durchbrechung
65 = Bund
67 = Öffnung
69 = Kolben
71 = Durchbrechung
73 = Teil
75 = Durchlass

## Patentansprüche

1. Entlüftungsvorrichtung an einem kombinierten Betriebsbrems- und Federspeicherbremszylinder (3, 4), insbesondere für Fahrzeugbremsanlagen, mit einem im Federspeicherbremszylinder (5) angeordneten, durch eine Speicherfeder (11) betätigbaren Kolben (9), dessen Kolbenstange (23) hohl ausgebildet ist und an ihrem vorderen, die Zwischenwand zwischen Betriebsbremszylinder (3) und Federspeicherbremszylinder (5) verschiebbar durchsetzenden Ende ein Druckstück (29) zur Beaufschlagung einer sich in den Betriebsbremszylinder erstreckenden Kolbenstange (37) trägt, mit einem aus der hohlen Kolbenstange (23) in die Federkammer (19) des Federspeicherbremszylinders mündenden Durchlass und mit einem im Druckstück angeordneten Entlüftungsventil (43, 45, 47), welches bei Betätigung der Federspeicherbremse und Entstehen eines Unterdrucks in der Federkammer (19) eine Verbindung zwischen der Federkammer und der Druckkammer (25) des Betriebsbremszylinders zu öffnen vermag, dadurch gekennzeichnet, dass das Entlüftungsventil ein elastisches Dichtungselement (Membrane 45) aufweist, welches auf der dem Betriebsbremszylinder zugewandten Seite dem Druck innerhalb der Druckkammer (25) des Betriebsbremszylinders (3) ausgesetzt ist und an der entgegengesetzten Seite ständig unter der Einwirkung des in der hohlen Kolbenstange (23) und somit in der Federkammer (19) bestehenden Druckes steht.

2. Entlüftungsvorrichtung nach Anspruch dadurch gekennzeichnet, dass das Dichtungselement aus einer Membrane (45) besteht, welche in Richtung der Federkammer (19) an einem Verschlussdeckel (47) anliegt, welcher eine zentrale Öffnung (43) und mehrere im Bereich des Aussenumfanges unter Abstand angeordnete Bohrungen (49) aufweist, derart, dass die Membrane durch den an ihr einwirkenden Druck der Druckkammer (25) sowohl die zentrale Öffnung (53) als auch die Bohrungen (49) abschliesst und somit die Verbindung zwischen der hohlen Kolbenstange und der Druckkammer (25) des Betriebsbremszylinders unterbricht, und dass die lichte Weite der zentralen Öffnung (53) so bemessen ist, dass die Membrane (45) durch einen in der hohlen Kolbenstange bestehenden Unterdruck durch die Öffnung (53) hindruch verformbar ist und die am Aussenumfang des Verschlussdeckels angeordneten Bohrungen (49) gleichzeitig öffnet.

3. Entlüftungsvorrichtung nach Anspruch 2, dadurch gekennzeichnet, dass an der bezüglich der Federkammer entgegengesetzten Seite der Membrane (45) ein durch Druck in der Druckkammer (25) des Betriebsbremszylinders beaufschlagbarer, die Membrane in Richtung des Verschlussdeckels drückender Kolben (43) vorgesehen ist, dass in das Druckstück ein mit der Druckkammer (25) verbundener Kanal (57) zur Druckbeaufschlagung des Kolbens (43) mündet, und dass die hohle Kolbenstange strömungsabwärts des Verschlussdeckels (47) bei geöffneter Membrane (45) über wenigstens einen zweiten Kanal (59) mit der Druckkammer (25) in Verbindung steht.

4. Entlüftungsvorrichtung nach einem der vorangehenden Ansprüche, dadurch gekennzeichnet, dass die Bohrungen (49) in einem inneren, ringförmigen Bund (65) des Druckstücks (29) vorgesehen sind, und dass die lichte Weite des Bunds die zentrale, von der Membrane überdeckte Öffnung (53) bildet.

## Claims

1. An exhaust device on a combined service brake and spring-loaded brake cylinder (3, 4), particularly for vehicle brakes, comprising a piston (9) which can be actuated by a spring (11) located in the spring-loaded brake cylinder (5), the piston rod (23) of the said piston (9) being hollow and also being furnished at the front end, that passes movably through the partition between service brake cylinder (3) and spring-loaded brake cylinder (5), with a thrust piece (29) for driving a piston rod (37) extending into the service brake cylinder; comprising a port from the hollow piston rod (23) to the spring chamber (19) of the spring-loaded brake cylinder; and comprising an exhaust valve (43, 45, 47) located in the thrust piece, the said exhaust valve being capable of providing communication between the spring chamber and the pressure chamber (25) of the service brake cylinder when the spring-loaded brake is actuated and a negative pressure is formed in the spring chamber (19), characterised in that the exhaust valve features a flexible sealing element (diaphragm 45) which, at the side facing towards the service brake cylinder, is exposed to the pressure inside the pressure chamber (25) of the service brake cylinder and, at the opposite side, is permanently exposed to the influence of the pressure existing in the hollow piston rod (23) and hence in the spring chamber (19).

2. An exhaust device according to claim 1, characterized in that the sealing element consists of a diaphragm (45) which contacts, in the direction of the spring chamber (19), a cap (47) having a central opening (43) and several holes (49) located at intervals around the outer circumference, such that the diaphragm, using the pressure acting on itself from the pressure chamber (25), closes both the central opening (53) and the holes (49) and hence interrupts the communication between the hollow piston rod and the pressure chamber (25) of the service brake cylinder, and in that the clear width of the central opening (53) is rated in such a way that the diaphragm (45) can be deformed through the opening (53) by a negative pressure inside the hollow piston rod, simultaneously opening the holes (49) located around the outer circumference of the cap.

3. An exhaust device according to claim 2, characterized in that a piston (43) which forces the diaphragm in the direction of the cap, and which can be actuated by pressure in the pressure chamber (25) of the service brake cylinder, is provided at the opposite side of the diaphragm (45) relative to the spring chamber, in that a passage communicating with the pressure chamber (25) discharges into the thrust piece for admitting pressure to the piston (43), and in that, downstream of the cap (47), the hollow piston rod communicates with the pressure chamber (25) via at least a second passage (59) when the diaphragm (45) is open.

4. An exhaust device according to any one of the preceding claims, characterized in that the holes (49) are arranged in an inner, annular flange (65) of the thrust piece (29), and in that the clear width of the flange forms the central opening (53) that is covered by the diaphragm.

## Revendications

1. Dispositif de mise à l'atmosphère pour un cylindre combiné ou double de frein de service et de frein à ressort accumulateur (3, 4), plus particulièrement pour des installations de freinage de véhicules, comportant un piston (9) disposé dans le cylindre de frein à ressort accumulateur (5), susceptible d'être commandé par un ressort accumulateur et dont la tige de piston (23) est creuse et porte, à son extrémité antérieure qui traverse, en pouvant s'y déplacer, la paroi intermédiaire entre le cylindre de frein de service (3) et le cylindre de frein à ressort accumulateur (5), une pièce de poussée (29) servant à charger une tige de piston (37) qui s'étend dans le cylindre de frein de service, ainsi qu'un passage débouchant dans la tige de piston creuse (23) dans la chambre à ressort (19) du cylindre de frein à ressort accumulateur, et une soupape (43, 45, 47) de mise à l'atmosphère disposée dans la pièce de poussée et qui, lors de la commande de frein à ressort accumulateur et de la formation d'une dépression dans la chambre à ressort (19), est capable d'ouvrir une liaison entre la chambre à ressort et la chambre de pression (25) du cylindre de frein de service, caractérisé par le fait que la soupape de mise à l'atmosphère comporte un élément élastique d'étanchéité (membrane 45) qui est exposé, du côté tourné vers le cylindre de frein de service, à la pression qui règne dans la chambre de pression (25) du cylindre de frein de service (3), et qui est soumise en permanence, du côté opposé, à l'action de la pression qui règne dans la tige de piston creuse (23) et de ce fait dans la chambre à ressort (9).

2. Dispositif de mise à l'atmosphère selon la revendication 1, caractérisé par le fait que l'élément d'étanchéité est constitué par une membrane (45) qui porte en direction de la chambre à ressort (19) contre un couvercle d'obturation (47) qui comporte une ouverture centrale (43) et plusieurs perçages (49) répartis dans la partie périphérique et distants entre eux, la réalisation étant telle que la membrane, sous l'effet de la pression de la chambre de pression (25) qui agit sur elle, obture tant l'ouverture centrale (53) que les perçages (49) et interrompt de ce fait la communication entre la tige de piston creuse et la chambre de pression (25) du cylindre de frein de service, et que la section de passage de l'ouverture centrale (53) est dimensionnée de telle façon que la membrane (45) est, par la dépression qui règne dans la tige de piston creuse, déformable à travers l'ouverture (53) et ouvre en même temps les perçages (49) disposés à la périphérie du couvercle d'obturation.

3. Dispositif de mise à l'atmosphère selon la revendication 2, caractérisé par le fait qu'il est prévu du côté opposé de la membrane (45), par rapport à la chambre à ressort, un piston (43) susceptible d'être chargé par la pression qui règne dans la chambre de pression (25) du cylindre de frein de service et repoussant la membrane en direction du couvercle d'obturation, que dans la pièce de poussée débouche un canal (57) relié à la chambre de pression en vue de charger en pression le piston (43), et que la tige de piston creuse (47) communique, lorsque la membrane (45) est ouverte, avec la chambre de pression (25) par l'intermédiaire d'au moins un second canal (59).

4. Dispositif de mise à l'atmosphère selon l'une des revendications précédentes, caractérisé par le fait que les perçages (49) sont prévus dans une collerette annulaire intérieure (65) de la pièce de poussée et que la section de passage de la collerette forme l'ouverture centrale (53) recouverte par la membrane.

Fig. 1

Fig.2

Fig. 3

Fig. 4

Fig. 5